# EUROPÄISCHE PATENTANMELDUNG

(11) **EP 1 384 544 A1**
(43) Veröffentlichungstag der Anmeldung: **28.01.2004**
(21) Anmeldenummer: 02291895.7
(22) Anmeldetag: 26.07.2002
(51) Int. Cl.: B23K 1/00

(54) **Vorrichtung zum Loten eines Wärmeübertragers**

(71) Anmelder: Behr Lorraine S.A.R.L., 57912 Hambach Cédex (FR)
(72) Erfinder: Haffner, Pascal, 57340 Virming (FR); Raynal, Philippe, 67260 Sarre-Union (FR); Simon, Johann, 57000 Metz (FR)
(74) Vertreter: Grauel, Andreas, Dr.

(57) **Zusammenfassung**

Die Erfindung betrifft eine Vorrichtung zum Löten eines Wärmeübertragers, insbesondere eines Flachrohrkondensators, bestehend aus einem Block aus Flachrohren und Wellrippen.

Es wird ein den Rohr/Rippen-Block in sich aufnehmender Lötrahmen vorgeschlagen, der zwei parallel zueinander angeordnete Lötleisten aufweist, die durch Zuganker verbunden sind, wobei die Lötleisten nach einer Seite offene Ausklinkungen aufweisen.

## Beschreibung

Die Erfindung betrifft eine Vorrichtung zum Löten eines Wärmeübertragers, insbesondere eines Flachrohrkondensators nach dem Oberbegriff des Patentanspruches 1 sowie ein Verfahren zum Löten eines Wärmeübertragers nach dem Oberbegriff des Patentanspruches 9, sowie ein Wärmetauscher gemäß Anspruch 10.

Wärmetauscher, wie insbesondere Flachrohrkondensatoren, wie sie heute für Kraftfahrzeugklimaanlagen verwendet werden, werden vorwiegend aus Aluminiumlegierungen hergestellt und in einem Lötofen gelötet. Solche Flachrohrkondensatoren bestehen - wie z. B. aus der DE-A 42 38 853 bekannt - aus einem Wärmeübertragernetz oder Block, der aus einer Vielzahl von Flachrohren und zwischen diesen angeordneten Wellrippen aufgebaut ist, und Sammelröhren, in die die Flachrohre münden. Die Herstellung eines dermaßen aufgebauten Flachrohrkondensators erfolgt in der Weise, dass zunächst die Teile für den Block, d. h. die Flachrohre und die Wellrippen, in einer entsprechenden Maschine, dem so genannten Blockfertiger, mechanisch gefügt, d. h. "kassettiert" werden. Um eine einwandfreie Verlötung der Wellrippen mit den Flachrohren zu erzielen, wird der fertige Block quer zur Längsrichtung der Rohre gespannt, damit sämtlichen Wellenkämme der Wellenrippen gleichmäßig an den Flachrohren anliegen. In diesem gespannten bzw. komprimierten Zustand wird der Block in einer Lötvorrichtung in den Lötofen verbracht und dort gelötet. Bei Erreichen der Löttemperatur wird das auf den Rippen und/oder Rohren befindliche Lot aufgeschmolzen, und der gesamte Block "setzt sich" und kann nach dem Löten im abgekühlten Zustand der Lötvorrichtung entnommen werden.

Es ist Aufgabe der vorliegenden Erfindung, eine Lötvorrichtung zu schaffen, die aus wenigen Teilen besteht, einfach im Aufbau und leicht zu handhaben ist. Es ist auch Aufgabe der Erfindung, ein Verfahren zum Löten eines Wärmeübertragers der eingangs genannten Art dahingehend zu verbessern, dass der Ablauf der Verfahrensschritte von der Blockfertigung bis zum Löten vereinfacht wird und die Herstellkosten des Wärmeübertragers gesenkt werden.

Diese Aufgabe wird durch die Merkmale des Patentanspruches 1, 9 und/oder 10 gelöst. Vorteilhafte Weiterbildungen der Lötvorrichtung ergeben sich aus den Unteransprüchen 2 bis 8.

Durch die erfindungsgemäße Lötvorrichtung wird der Vorteil erzielt, dass der Rohr/Rippen-Block im komprimierten Zustand in die Lötvorrichtung eingesetzt und mit dieser in den Lötofen verbracht werden kann, ohne dass hierfür weitere Teile zum Spannen des Blockes (Spannmittel) benötigt werden. Die Lötvorrichtung besteht aus einem einzigen Teil, d. h. ohne weitere lose Teile. Der Block kann nach dem Löten ohne Hilfsmittel der Lötvorrichtung entnommen werden.

Um die Spannung des komprimierten Blockes aufzunehmen, sind zwei sich gegenüber liegende Lötleisten der Lötvorrichtung durch Zuganker miteinander verbunden. Dadurch ergibt sich eine gleichmäßige Pressung und Anlage der Wellrippen an den Flachrohren.

Vorteilhafterweise weisen die beiden Lötleisten ein zu einer Längsseite hin offenes Profil auf, d. h. beide Lötleisten sind mit Ausklinkungen versehen, die nach oben offen sind. Dadurch ist es möglich, dass der vorgespannte Block mittels eines Spannwerkzeuges, welches eine Vielzahl von Druckfingern im Abstand und in der Größe der Ausklinkungen aufweist, in die Lötvorrichtung von oben her eingesetzt werden kann. Die Druckfinger werden dann durch die Ausklinkungen nach außen gefahren, und die Spannung des Blockes wird durch die Lötleisten aufrechterhalten. Der komprimierte Block kann somit ohne zusätzliche Hilfsmittel in die Lötvorrichtung eingesetzt werden.

Ein Ausführungsbeispiel der Erfindung ist in der Zeichnung dargestellt und wird im Folgenden näher beschrieben. Es zeigen
- Fig. 1: eine Lötvorrichtung und
- Fig. 2: die Lötvorrichtung gemäß Fig. 1 mit eingesetztem Block.

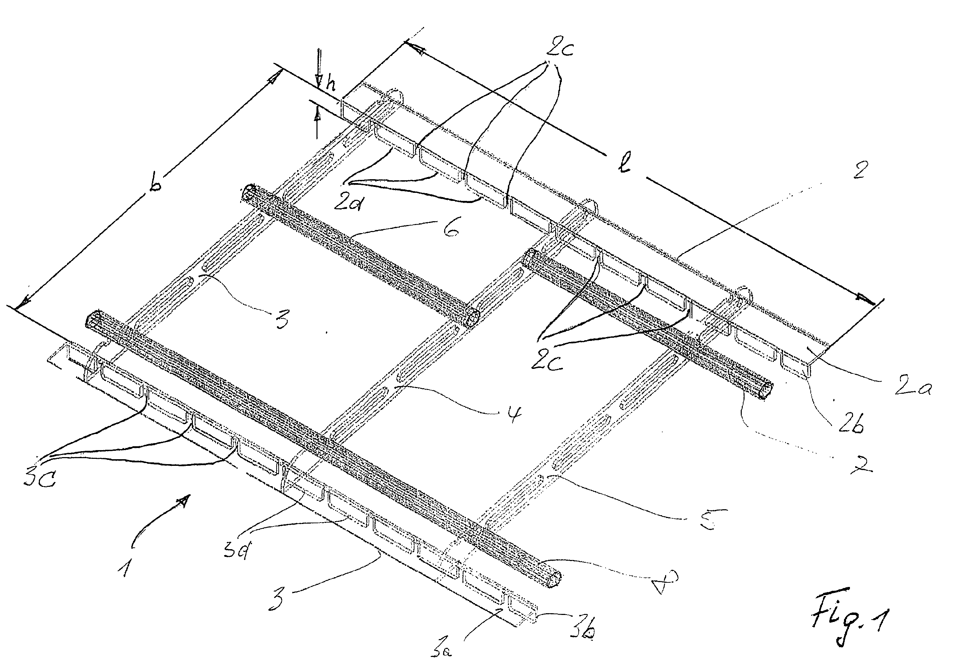

Fig. 1 zeigt eine Lötvorrichtung 1, wie sie für das Löten von Flachrohrkondensatoren oder ähnlich aufgebauten Wärmeübertragern verwendet werden kann. Die Lötvorrichtung 1 ist als Lötrahmen ausgebildet und besteht aus zwei parallel zueinander angeordneten Lötleisten 2, 3, die durch drei Zuganker 3, 4, 5 miteinander verbunden sind. Quer zu den Zugankern 3, 4, 5 sind Querholme 6, 7, 8 angeordnet, die fest mit den Zugankern verbunden sind, z. B. durch eine Schweißverbindung, so dass sich ein steifer, verzugfreier Lötrahmen 1 ergibt. Die Lötleisten 2, 3 sind als biegesteife Winkelprofile oder andere einen Seitenhalt gewährleistende Schienen mit vorzugsweise jeweils zwei Schenkeln 2a, 2b bzw. 3a, 3b ausgebildet. Die Schenkel 2a, 3a sind durchgehend, während die abgewinkelten Schenkel 2b, 3b eine unterbrochene Form aufweisen, d. h. die beiden sich gegenüber liegenden Schenkel 2b, 3b weisen eine Vielzahl von schlitzartigen Ausklinkungen 2c, 3c auf, die (in der zeichnerischen Darstellung) nach unten offen sind. Die Ausklinkungen 2c, 3c sind in diesem Ausführungsbeispiel U-förmig ausgebildet, andere geometrische Formen von Ausklinkungen, z. B. Halbkreise oder nach außen offene Dreiecke sind ebenso möglich. Der Lötrahmen 1 hat folgende an den zu lötenden Wärmeübertrager angepasste Abmessungen: Länge I, Höhe h sowie Abstand b der Lötleisten 2, 3.

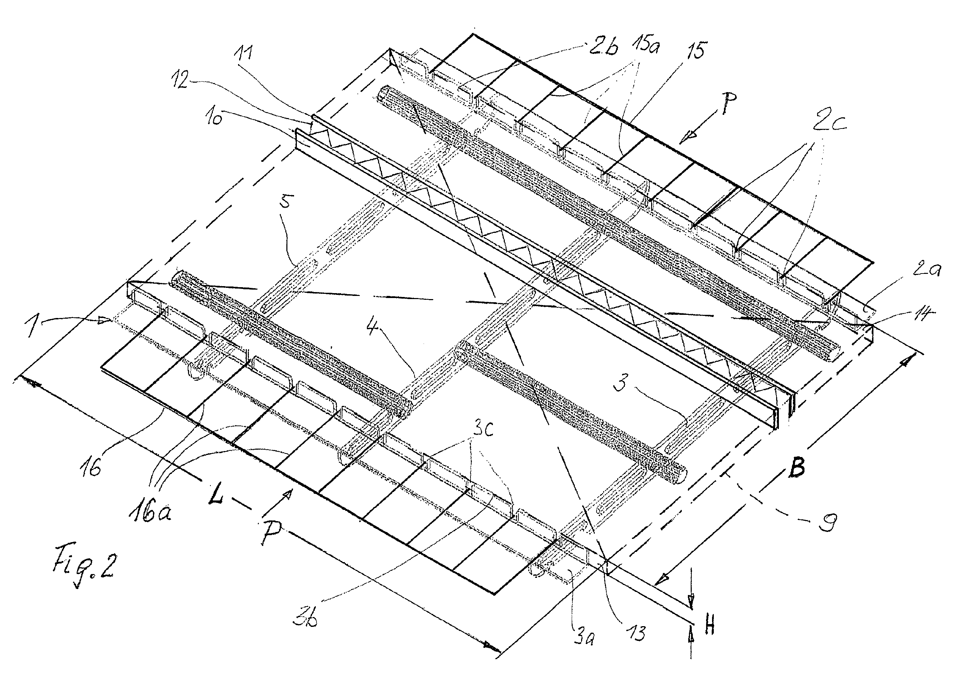

Fig. 2 zeigt die Lötvorrichtung gemäß Fig. 1 um 180 Grad gedreht, d. h. die Schenkel 2a, 3b der Lötleisten 2, 3 liegen hier unten, und die Ausklinkungen 2c, 3c sind nach oben offen. Die Lötvorrichtung 1 ruht somit auf den Zugankern 3, 4, 5 auf einer nicht dargestellten ebenen Unterlage. Von oben her ist in den Lötrahmen 1, d. h. zwischen die Lötleisten 2b, 3b ein Rohr/Rippen-Block 9 (gestrichelt dargestellt) eingesetzt. Dieser Rohr/Rippen-Block 9 ist vereinfacht als quaderförmiger, flacher Körper dargestellt, und zwar mit einer Länge L, einer Breite B und einer Höhe H. Wie bereits erwähnt, besteht ein solcher Block aus einer Vielzahl von Flachrohren und Wellrippen, von denen hier beispielhaft zwei Flachrohre 10, 11 und eine zwischen diesen angeordnete Wellrippe 12 dargestellt sind. An den Längsseiten wird der Block 9 jeweils durch ein Seitenteil 13, 14 abgeschlossen, welches in nicht näher dargestellter Weise als ebener Blechstreifen ausgebildet ist.

Wie bereits eingangs erwähnt, wird der Block 9 in einem nicht dargestellten Blockfertiger zusammengestellt ("kassettiert") und dann gespannt, um Flachrohre 10, 11 und Wellrippen 12 aneinander zu drücken. In diesem gespannten Zustand wird der Block 9 in die Lötvorrichtung 1, d. h. zwischen die ausgeklinkten Schenkel 2b, 3b der Lötleisten 2, 3 eingesetzt. Dies erfolgt mittels zwei schematisch dargestellten Drückwerkzeugen 15, 16, die jeweils eine Vielzahl von Druckfingern 15a, 16a aufweisen, welche die Ausklinkungen 2c, 3c durchgreifen. Die Drückwerkzeuge 15, 16 weisen also - vereinfacht - die Form eines Rechens auf, wobei die Druckfinger 15a, 16a die Zinken bilden, die in die Ausklinkungen 2c, 3c eingreifen. Die beiden Drückwerkzeuge 15, 16 werden in Richtung der beiden Pfeile P mittels der Druckfinger 15a, 16a gegen die Seitenteile 13, 14 des Blockes 9 gepresst, halten den Block und setzen ihn von oben her in die Lötvorrichtung 1 ein. Nachdem der Block 9 seine Position in der Lötvorrichtung 1 erreicht hat, werden die beiden Drückwerkzeuge 15, 16 nach außen, also entgegen der Richtung der Pfeile P gefahren, und der Block 9 ist zwischen den beiden Lötleisten 2, 3 eingespannt. Der Block 9 ist also vor dem Einsetzen in die Lötvorrichtung 1 auf ein Maß B komprimiert, welches etwas geringer als der Abstand b (Fig. 1) zwischen den Lötleisten 2b, 3b ist, so dass der Block 9 mit leichtem Spiel eingesetzt werden kann. Sobald die beiden Werkzeuge 15, 16 auseinander gefahren werden, federt der Block 9 aufgrund der Elastizität der Wellrippen zurück und legt sich mit den Seitenteilen an die ausgeklinkten Schenkel 2b, 3b der Lötleisten 2, 3 an, wobei dann noch die für den Lötprozess erforderliche Vorspannung des Blockes 9 erhalten bleibt. Der Block 9 wird nunmehr zusammen mit der Lötvorrichtung 1 in einen nicht dargestellten Lötofen verbracht, z. B. indem die Lötvorrichtung 1 mitsamt dem Block 9 auf einem Förderband abgestellt wird. Während des Lötprozesses verlöten Wellrippen und Rohre miteinander. Nach Beendigung der Lötung wird die Lötvorrichtung 1 mit dem Block aus dem Lötofen herausgefahren und abgekühlt - danach kann der Block ohne weiteres, da sich seine Breite B durch den Lötprozess verkürzt hat, der Lötvorrichtung 1 entnommen werden.

Der Block 9 kann auch - was zur Vereinfachung hier nicht dargestellt ist, zusammen mit nicht dargestellten Böden und/oder den Sammelrohren des Kondensators und/oder mit Sammlern und/oder Anschlußrohren verlötet werden.

## Patentansprüche

1. Vorrichtung zum Löten eines Wärmeübertragers, insbesondere eines Flachrohrkondensators, bestehend aus einem Block (9) aus Flachrohren (10, 11) und Wellrippen (12), **gekennzeichnet durch** einen den Block (9) in sich aufnehmenden Lötrahmen (1), der zwei parallel zueinander angeordnete Lötleisten (2, 3) aufweist, die **durch** Zuganker (3, 4, 5) verbunden sind.

2. Vorrichtung nach Anspruch 1, **dadurch gekennzeichnet, dass** die Lötleisten (2, 3) einen festen Abstand b zueinander aufweisen, der der Breite B des komprimierten Blockes (9) entspricht.

3. Vorrichtung nach Anspruch 1 oder 2, **dadurch gekennzeichnet, dass** die Lötleisten (2b, 3b) eine Höhe h und eine Länge l aufweisen, die der Höhe H und der Länge L des Blockes (9) entsprechen.

4. Vorrichtung nach Anspruch 1, 2 oder 3, **dadurch gekennzeichnet, dass** die Lötleisten (2b, 3b) ein nach einer Längsseite hin offenes Profil mit einer Vielzahl von Ausklinkungen (2c, 3c) aufweisen.

5. Vorrichtung nach Anspruch 5, **dadurch gekennzeichnet, dass** die Zuganker (3, 4, 5) an den unteren Längsseiten (2a, 3a) der Lötleisten (2, 3) befestigt und dass die Ausklinkungen (2c, 3c) zu den oberen Längsseiten (2d) der Lötleisten (2, 3) hin offen sind.

6. Vorrichtung nach Anspruch 5 , **dadurch gekennzeichnet, dass** die Ausklinkungen als senkrecht zur Längsseite (2d) angeordnete Schlitze (2c, 3c) ausgebildet sind.

7. Vorrichtung nach einem der Ansprüche 1 bis 6, **dadurch gekennzeichnet, dass** die Zuganker (3, 4, 5) durch Querholme (6, 7, 8) verbunden sind.

8. Vorrichtung nach einem der Ansprüche 1 bis 7, **dadurch gekennzeichnet, dass** die Lötleisten (2, 3) als Winkelprofile mit einem durchgehenden Schenkel (2a, 3a) und einem ausgeklinkten Schenkel (2b, 3b) ausgebildet sind.

9. Verfahren zum Löten eines Wärmeübertragers, insbesondere eines Flachrohrkondensators, bestehend aus einem Block aus Flachrohren und Wellrippen, **dadurch gekennzeichnet, dass**
- die Flachrohre (10, 11) und die Wellrippen (12) mechanisch zu einem Block (9) gefügt ("kassettiert") werden,
- dass der Block (9) quer zur Längsrichtung der Flachrohre (10, 11) mittels eines Drückwerkzeuges (15, 16) auf ein Breitenmaß B komprimiert und
- im komprimierten Zustand in einen Lötrahmen (1, 2, 3) eingesetzt wird, wobei der Lötrahmen (1) mittels Lötleisten (2, 3) den komprimierten Zustand des Blockes (9) aufrechterhält,
- dass der komprimierte Block (9) mit dem Lötrahmen (1, 2, 3) in einen Lötofen verbracht und dort gelötet wird.

10. Wärmetauscher hergestellt insbesondere nach einem Verfahren gemäß Anspruch 9 und/oder mit einer Vorrichtung nach zumindest einem der Ansprüche 1 bis 8.
